(19) **Europäisches Patentamt / European Patent Office / Office européen des brevets**

(11) **EP 1 585 389 B1**

(12) **EUROPEAN PATENT SPECIFICATION**

(45) Date of publication and mention
of the grant of the patent:
**16.03.2011 Bulletin 2011/11**

(51) Int Cl.:
**A01N 53/06** (2006.01)   **A01N 47/40** (2006.01)
**A01N 25/00** (2006.01)

(21) Application number: **04704795.6**

(22) Date of filing: **23.01.2004**

(86) International application number:
**PCT/US2004/001764**

(87) International publication number:
**WO 2004/064517 (05.08.2004 Gazette 2004/32)**

(54) **TERMITICIDE COMPOSITIONS**

TERMITIZID-ZUSAMMENSETZUNGEN

COMPOSITIONS TERMITICIDES

(84) Designated Contracting States:
**FR**

(30) Priority: **23.01.2003 US 442046 P**

(43) Date of publication of application:
**19.10.2005 Bulletin 2005/42**

(73) Proprietor: **Nippon Soda Co., Ltd.**
**Tokyo 100-8165 (JP)**

(72) Inventors:
• **WRIGHT, John, F.**
  **Cherry Hill, NJ 08003 (US)**
• **BALLARD, James, B.**
  **Medford, NJ 08055 (US)**

(74) Representative: **Thom, Russell**
**Murgitroyd & Company**
**Scotland House**
**165-169 Scotland Street**
**Glasgow G5 8PL (GB)**

(56) References cited:
**US-A- 5 880 142    US-A1- 2001 023 552**

• **BASKARAN SUNDARAM ET AL: "Degradation of bifenthrin, chlorpyrifos and imidacloprid in soil and bedding materials at termiticidal application rates" PESTICIDE SCIENCE, vol. 55, no. 12, December 1999 (1999-12), pages 1222-1228, XP002460459 ISSN: 0031-613X**

**Description**

The present invention relates generally to pesticidal compositions. In particular, it pertains to compositions useful for control of soil-borne termites.

## BACKGROUND OF THE INVENTION

Termites are undisputedly the most destructive of all structural insects. Termites are estimated to cause 1.5 billion dollars of damage to structures annually, and an additional one billion dollars is spent on treatment. Depending on the type of termite, a colony can cover as much as 22,000 square feet. These industrious insects work 24 hours a day, gradually eating wood and any other cellulose containing material in their environment. Since they remain hidden within the wood in which they are feeding, in mud tubes, or in the soil, they typically wreak havoc undetected. There are two types of termites, described as i) dry wood termites, and ii) subterranean termites. Of these two types, the subterranean termites usually live in the soil (i.e., soil-borne), from which they build mud tubes to structural wood where they then feed.

Control of soil-borne termites can be accomplished by strategic application of a termiticide to the soil where there is a termite infestation, to provide a continuous chemical barrier in the soil surrounding and beneath a structure. However, the final distribution of a liquid termiticide in soil is the result of a whole series of variables: soil moisture, soil type, solubility of the active ingredient in water, formulation type, and application variables such as volume applied, pressure and nozzle type. A standard method for placing the termiticide in the soil is by physical means, a method that may, or may not be totally reliable for reasons set forth above. Such physical means include, *inter alia*, (1) the digging of trenches around the outside of a structure, then flooding the trenches with termiticide, or (2) by injecting the termiticide directly into the soil using a mechanical device, such as a soil rod. These methods are very labor-intensive, and require an inordinate amount of termiticide to be effective. Another method for control of soil-borne termites is by the application of a termiticide directly to the surface of soil, thereby in theory creating a chemical barrier in the soil when the termiticide leaches into the soil. Termiticides having potential utility in application directly to the surface of soil are in the form of a liquid termiticide. A liquid termiticide is defined as a formulation containing at least one termiticide where the formulation is dispensed in an aqueous medium prior to its application to a locus where termite control is needed. Examples of formulations that can be dispensed in aqueous medium to provide a liquid termiticide include, without limitation, formulations of the termiticide bifenthrin, sold by FMC Corporation under the names and trademarks of Talstar® GC Flowable Insecticide/Miticide, or Talstar® Termiticide/Insecticide. However, the termiticide in most liquid termiticides prepared from these formulations are not particularly mobile in the soil. That is to say, the termiticide does not appreciably spread downwardly and laterally from its point of application on the surface of the soil. Reasons for the immobility of such termiticides in liquid termiticides when placed on the soil include, *inter alia,* (1) the limited water solubility of the termiticide, for example, of about 3 parts per million (ppm) or less, and (2) the tendency of the termiticide to bind to the soil. Consequently when a liquid termiticide containing such relatively water-insoluble, soil-binding termiticides are applied to the soil, there may be gaps, or thinly treated areas, in the desired continuous chemical barrier caused by the immobility of the termiticide in the soil. Termites, therefore, can gain access to food sources/structures through gaps and thinly treated areas in the chemical barrier. One advantage to certain liquid termiticides of this type, such as bifenthrin, is that they are repellent to termites.

Other liquid termiticides, for example, acetamiprid are not repellent to termites, but are more water-soluble and consequently have higher soil mobility. These types of liquid termiticides are shorter lived, but can inflict high mortality to the termite population relatively quickly.

Hence, it would be advantageous to provide a continuous chemical barrier to termites that has long lasting termite repellency coupled with a shorter-term ability to provide high mortality to termites.

US 5,880,142 describes combating termites with a composition comprising a permeable insecticidal compound and a pyrethroid compound. Specifically, the compounds are acetamiprid and either cyfluthrin or permethrin. Any combination of acetamiprid and bifenthrin is not shown.

An article entitled "Degradation of bifenthrin, chlorpyrifos and imidacloprid in soil..." in Pestic Sci 55:1222-1228 (1999) investigates the degradation of the three named insecticides at termicidal application rates under standard laboratory conditions for 24 months. No mention of acetamiprid therewith is mentioned.

US 2001/0023552 A1 describes termite controlling tablets comprising paper shred supporting at least one active ingredient, and a large number of termite controlling active ingredients are listed. Bifenthrin and acetamiprid are separately listed, but not any combination thereof.

## SUMMARY OF THE INVENTION

It has now been unexpectedly found that application of a termiticide composition containing a mixture of two termiticides, i.e., bifenthrin and acetamiprid, results in a continuous chemical barrier which provides both a long lasting termite repellent component and a fast acting termite killing component. It has also been found that application of a combination of bifenthrin and acetamiprid to an area infested by termites results in unexpectedly improved control of the termites as compared to the results with either of these materials alone.

## DETAILED DESCRIPTION OF THE INVENTION

It has now been unexpectedly found that application of a liquid termiticide composition containing bifenthrin and acetamiprid, results in a continuous chemical barrier which provides both a long lasting termite repellent component and a fast acting termite killing component as well as more effective elimination of termites in the area to which the combination is applied. The amount of bifenthrin in the combination should be equal to from about 0.0001 to about 0.3 percent by weight and the amount of acetamiprid should be equal to from about 0.0001 to about 0.3 percent. All percents are percent by weight based on the total weight of the composition. Preferred results are achieved with an amount of bifenthrin equal to from 0.001 to 0.06 percent and an amount of acetamiprid equal to from 0.01 to 0.1 percent. An especially preferred termiticide composition of the present invention is comprised of 0.03% by weight to 0.06% by weight of bifenthrin and 0.0125% by weight to 0.1% by weight of acetamiprid.

As set forth above, a liquid termiticide is any formulation containing a termiticide where the formulation is dispensed in an aqueous medium prior to its application to a locus where termite control is needed. That is to say, a liquid termiticide is made up of 1) a formulation of a termiticide, and 2) an aqueous medium. There may be more than one formulation for a particular termiticide, depending upon how that termiticide is to be used to control termites. The compositions of the present invention may be derived from commercially available formulations of termiticides. All such formulations of termiticides that are dispensed in an aqueous medium prior to application are, therefore, within the scope of the present invention. Formulations of bifenthrin which are particularly useful are set forth below:

| Examples of Bifenthrin Formulations From Which a Liquid Termiticide May be Derived by Dispensing into an Aqueous Medium | Termiticide In Formulation | Manufactured By: |
|---|---|---|
| Talstar® Termiticide/Insecticide | Bifenthrin | FMC Corporation |
| Talstar® GC Flowable Insecticide/Miticide | Bifenthrin | FMC Corporation |

Formulations of acetamiprid that are particularly useful in the context of the present invention include, without limitation, acetamiprid (sold under the name and trademark of INTRUDER), sold as a 70% wettable powder.

Using methods known to those skilled in the art, the formulations of termiticides are dispersed in an aqueous medium to provide a composition containing a termiticidally effective amount of a termiticide.

The following examples further illustrate the present invention, but, of course, should not be construed as in any way limiting its scope. The examples set forth certain biological data illustrating the efficacy of the compositions of the present invention in controlling termites. Unless otherwise indicated, all parts, percentages, and the like are by weight.

EXAMPLE 1

Test to Determine Termite Mortality by Soil Applications of Combinations of Bifenthrin and Acetamiprid

The compositions of the present invention were tested for termiticide activity in the following manner:

Test compositions made up of Talstar® Termiticide/Insecticide and a 70% wettable powder of acetamiprid in distilled water were prepared that provided appropriate rates of application of combinations of bifenthrin and acetamiprid, as well as bifenthrin and acetamiprid alone.

Glass tubing, 13 mm in diameter, was then cut into 20 cm sections in sufficient quantity to conduct the test. Each 20 mm section of tubing was marked at 5 cm, 8 cm, and 18 cm distances from one end of the tube designated as the bottom. Each section of tubing was packed with a sandy soil (3% wt/wt moisture content) by first placing a section of a 1 cm diameter wooden dowel into the bottom of the glass tube up to the 8 cm marking, then introducing approximately 2 cm of soil into the other end of the tube designated as the top. The soil was then gently packed into the tube from the top using a second section of the 1 cm diameter wooden dowel. The process was repeated using 2 cm aliquots of soil until the soil level was adjacent to the 18 cm marking, thereby providing a column of soil 10 cm in height. An agar plug, which was formed in a section of the 13 mm diameter glass tubing of the type used to conduct these tests, was cut into 3 cm sections. A 3 cm section of agar was then gently pushed into the bottom of each tube containing the soil until the agar plug firmly touched the soil at the 8 cm marking, thereby creating a 5 cm void in the bottom of each section of tubing. Following placement of the agar plugs in each section of tubing; two sections of applicator sticks cut in 6 cm lengths were inserted into the bottom end of each tube thereby forcing about 1 cm of each stick into the agar plug to hold the agar plug in place. Plastic caps, with an inside diameter of 13 mm and holes drilled in their centers, were placed on the bottom ends of each of the sections of tubing. A sharpened applicator stick was then inserted into the hole in each plastic cap through the agar plug to the intersection of the agar plug and the soil. The applicator stick was then gently removed in a rotating manner to provide a means for a free flow of liquid through the soil. Each section of tubing was then stood upright, and 0.5 mL aliquots of each suspension of bifenthrin, acetamiprid or combinations thereof , as prepared above, were pipetted onto the top of the soil. Upon application of the test suspensions the top of each section of tubing was covered with a small piece of aluminum foil. The tubes were then allowed to stand for about 20 hours to allow movement of the termiticide(s) downward into the soil. After this time a plastic cap of 13 mm inside diameter was placed on the top of each section of tubing. The plastic caps with the holes drilled in their centers were removed from the bottom of each section of tubing, and a piece of 0.5 cm x 4 cm filter paper was then placed between the two sections of applicator sticks. Fifty termite (*Reticulitermes flavipes*) workers were then inserted into the 5 cm void in the bottom of each section of tubing. New plastic caps without holes drilled in their centers were placed on the bottom of each section of tubing. The sections of tubing were then stored in an upright position, with the termites located below the soil. At 1, 3, 6, 8, 10, 13, 15, 17, 20, and 22 days after treatment (DAT), termite mortality was measured. The following results were obtained:

Table 1

| Control of Termites by Soil Application of Bifenthrin and Acetamiprid Combinations | | | | | | | | | | |
|---|---|---|---|---|---|---|---|---|---|---|
| | Percent Mortality | | | | | | | | | |
| Treatment | 1 DAT | 3 DAT | 6 DAT | 8 DAT | 10 DAT | 13 DAT | 15 DAT | 17 DAT | 20 DAT | 22 DAT |
| Bifenthrin @ 60 ppm | 6 | 6 | 11 | 13 | 13 | 13 | 16 | 16 | 16 | 16 |
| Acetamiprid @ 500 ppm | 5 | 84 | 100 | 100 | 100 | 100 | 100 | 100 | 100 | 100 |
| Bifenthrin @ 60 ppm + Acetamiprid @ 500 ppm | 5 | 52 | 100 | 100 | 100 | 100 | 100 | 100 | 100 | 100 |
| Bifenthrin @ 60 ppm + Acetamiprid @ 250 ppm | 6 | 21 | 90 | 90 | 90 | 90 | 90 | 90 | 90 | 90 |
| Bifenthrin @ 60 ppm + Acetamiprid @ 100 ppm | 7 | 20 | 88 | 88 | 88 | 100 | 100 | 100 | 100 | 100 |
| Bifenthrin @ 60 ppm + Acetamiprid @ 25 ppm | 5 | 31 | 84 | 96 | 88 | 88 | 88 | 88 | 88 | 88 |
| Bifenthrin @ 60 ppm + Acetamiprid @ 10 ppm | 1 | 31 | 60 | 62 | 63 | 78 | 80 | 80 | 80 | 80 |
| Untreated | 0 | 0 | 0 | 0 | 0 | 0 | 0 | 0 | 0 | 0 |
| DAT is Days After Treatment | | | | | | | | | | |

EXAMPLE 2

Test to Determine Termite Mortality by Direct Application of Combinations of Bifenthrin and Acetamiprid to Termites

The compositions of the present invention were tested for termiticide activity in the following manner:

Test compositions made up of Talstar® Termiticide/Insecticide and a 70% wettable powder of acetamiprid in distilled water were prepared that provided appropriate rates of application of combinations of bifenthrin and acetamiprid, as well as bifenthrin and acetamiprid alone.

Solutions of the test materials were applied directly to 50 termites (*Reticulitermes flavipes*) per petri plate using a track sprayer calibrated to deliver 1.2 ml per petri plate at 40 psi. After application, petri dishes with treated termites were inverted onto fresh petri plates containing dry filter paper. After all applications were completed, termites were then transferred to petri dishes containing moist soil with cardboard as a food source. Expired termites were removed at each reading. At 0 hours, 1 hour, 2 hours, 1 day, and 2 days after treatment (HAT or DAT, respectively), termite mortality was measured. The following calculation determined whether the combination treatments provided enhanced activity over what would be expected based on the activity of each active ingredient separately:

$$\left( \frac{\text{Percent Mortality of A}}{100} + \left( \frac{100 - \text{Percent Mortality of A}}{100} * \frac{\text{Percent Mortality of B}}{100} \right) \right) * 100$$

A and B refer to the two separate treatments of two different active ingredients at specific rates.

Table 2

| Control of Termites by Direct Application of Bifenthrin and Acetamiprid Combinations | | | | | |
|---|---|---|---|---|---|
| | Percent Mortality | | | | |
| Treatment | 0 HAT | 1 HAT | 2 HAT | 1 DAT | 2 DAT |
| Bifenthrin @ 10 ppm | 0 | 0 | 0 | 11 | 26 |
| Bifenthrin @ 50 ppm | 0 | 0 | 0 | 63 | 96 |
| Acetamiprid @ 100 ppm | 0 | 0 | 0 | 16 | 78 |
| Acetamiprid @ 200 ppm | 0 | 0 | 0 | 35 | 88 |
| Bifenthrin @ 10 ppm + Acetamiprid @ 100 ppm | 0 | 0 | 0 | 76* | 99 * |
| Bifenthrin @ 10 ppm + Acetamiprid @ 200 ppm | 0 | 0 | 0 | 78 * | 100 * |
| Bifenthrin @ 50 ppm + Acetamiprid @ 100 ppm | 0 | 0 | 0 | 93 * | 100 * |
| Bifenthrin @ 50 ppm + Acetamiprid @ 200 ppm | 0 | 0 | 0 | 94 * | 99 * |
| Untreated | 0 | 0 | 0 | 1 | 4 |
| HAT is Hours After Treatment<br>DAT is Days After Treatment<br>* Combination treatments where enhanced effects were observed above and beyond what would be anticipated based on each active ingredient alone. | | | | | |

In the context of the present invention, the term "termiticide" refers to the active chemical compound or ingredient, such as bifenthrin or acetamiprid, that kills or repels termites. The term "termiticide" refers to a formulation of a termiticide where the formulation can be dispensed in an aqueous medium prior to its application to a locus where termite control is desired. The term "locus" refers to any locations where control of termites is needed or is expected to be needed. Such locations include, without limitation, buildings, trees, posts, poles, fences, and locations adjacent to buildings, trees, posts, poles, fences, as well as other locations. The term "repellency" refers to driving back, warding off, or keeping termites away through the use of a termiticide in a termite barrier. The terms "mortality", "percent mortality", "control", or "percent control" may be used interchangeably, and refer to the killing of and/or repelling of termites.

**Claims**

1.  A termiticide composition comprising i) bifenthrin and ii) acetamiprid.

2.  A composition according to claim 1, wherein the composition contains from 0.0001% by weight to 0.3% by weight of bifenthrin and from 0.0001% by weight to 0.3% by weight of acetamiprid.

3.  A composition according to claim 1, wherein the composition contains from 0.001 % by weight to 0.06% by weight of bifenthrin and 0.01 % by weight to 0.1% by weight of acetamiprid.

4.  A composition according to claim 1, wherein the composition contains from 0.03% by weight to 0.06% by weight of bifenthrin and 0.0125% by weight to 0.1% by weight of acetamiprid.

5.  A method for controlling termites, comprising applying a termiticidally effective amount of a composition of claim 1 to a locus where termite control is needed or is expected to be needed.

6.  A method according to claim 5, wherein said locus is selected from a termite-infested structure, a structure that is expected to be termite-infested, or a location adjacent to said structures.

**Patentansprüche**

1.  Eine Termitizidzusammensetzung, die i) Bifenthrin und ii) Acetamiprid beinhaltet.

2.  Zusammensetzung gemäß Anspruch 1, wobei die Zusammensetzung von 0,0001 Gew.-% bis 0,3 Gew.-% Bifenthrin und von 0,0001 Gew.-% bis 0,3 Gew.-% Acetamiprid enthält.

3.  Zusammensetzung gemäß Anspruch 1, wobei die Zusammensetzung von 0,001 Gew.-% bis 0,06 Gew.-% Bifenthrin und 0,01 Gew.-% bis 0,1 Gew.-% Acetamiprid enthält.

4.  Zusammensetzung gemäß Anspruch 1, wobei die Zusammensetzung von 0,03 Gew.-% bis 0,06 Gew.-% Bifenthrin und 0,0125 Gew.-% bis 0,1 Gew.-% Acetamiprid enthält.

5.  Ein Verfahren zur Kontrolle von Termiten, das das Anwenden einer als Termitizid wirksamen Menge einer Zusammensetzung gemäß Anspruch 1 auf einen Ort, an dem die Kontrolle von Termiten erforderlich ist oder erwartungsgemäß erforderlich ist, beinhaltet.

6.  Verfahren gemäß Anspruch 5, wobei der Ort aus einer von Termiten befallenen Struktur, einer Struktur, die erwartungsgemäß von Termiten befallen werden wird, oder einer Stelle angrenzend an diese Strukturen ausgewählt ist.

**Revendications**

1.  Une composition termiticide comprenant i) de la bifenthrine et ii) de l'acétamipride.

2.  Une composition selon la revendication 1, où la composition contient de 0,0001 % en poids à 0,3 % en poids de bifenthrine et de 0,0001 % en poids à 0,3 % en poids d'acétamipride.

3.  Une composition selon la revendication 1, où la composition contient de 0,001 % en poids à 0,06 % en poids de bifenthrine et de 0,01 % en poids à 0,1 % en poids d'acétamipride.

4.  Une composition selon la revendication 1, où la composition contient de 0,03 % en poids à 0,06 % en poids de bifenthrine et de 0,0125 % en poids à 0,1 % en poids d'acétamipride.

5.  Une méthode pour le contrôle des termites, comprenant appliquer une quantité efficace d'un point de vue termiticidal d'une composition de la revendication 1 à un site où le contrôle des termites est nécessaire ou sera vraisemblablement nécessaire.

6. Une méthode selon la revendication 5, où ledit site est sélectionné parmi une structure infestée de termites, une structure qui est vraisemblablement infestée de termites, ou un emplacement adjacent auxdites structures.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5880142 A
- US 20010023552 A1

**Non-patent literature cited in the description**

- Degradation of bifenthrin, chlorpyrifos and imidacloprid in soil.. *Pestic Sci,* 1999, vol. 55, 1222-1228